# EUROPEAN PATENT APPLICATION

(11) **EP 1 001 375 A2**
(43) Date of publication of application: **17.05.2000**
(21) Application number: 99120279.7
(22) Date of filing: 11.10.1999
(51) Int. Cl.: G06T 11/00

(54) **Pipelined cropping for manipulating volume data sets in real-time**

(30) Priority: 12.11.1998 US 190645
(71) Applicant: MITSUBISHI DENKI KABUSHIKI KAISHA, Tokyo 100-8310 (JP)
(72) Inventor: Simha, Vikram, Lexington, Massachusetts 02421 (US); Knittel, James, Groton, Massachusetts 01450 (US)
(74) Representative: Pfenning, Meinig & Partner GbR

(57) **Abstract**

Data associated with a volume image is processed in real-time by a pipeline that includes cropping stages. The data is clocked through the cropping stages at a predetermined rate to facilitate rendering of at least 30 frames per second. The pipeline enables up to three orthogonal cropping regions to be defined, and various combinations of the cropping regions are achieved by control logic that implements intersection (AND), union (OR) and inversion (!) operations.

## Description

### CROSS REFERENCE TO RELATED APPLICATIONS

N/A

### BACKGROUND OF THE INVENTION

The present invention is related to the field of computer graphics, and in particular to volume graphics.

Volume graphics is the subfield of computer graphics that deals with the visualization of objects or phenomena represented as sampled data in three or more dimensions. These samples are called volume elements, or "voxels," and contain digital information representing physical characteristics of the objects or phenomena being studied. For example, voxel values for a particular object or system may represent density, type of material, temperature, velocity, or some other property at discrete points in space throughout the interior and in the vicinity of that object or system.

Volume rendering is the part of volume graphics concerned with the projection of volume data as two-dimensional images for purposes of printing, display on computer terminals, and other forms of visualization. By assigning colors and transparency to particular voxel data values, different views of the exterior and interior of an object or system can be displayed. For example, a surgeon needing to examine the ligaments, tendons, and bones of a human knee in preparation for surgery can utilize a tomographic scan of the knee and cause voxel data values corresponding to blood, skin, and muscle to appear to be completely transparent. The resulting image then reveals the condition of the ligaments, tendons, bones, etc. which are hidden from view prior to surgery, thereby allowing for better surgical planning, shorter surgical operations, less surgical exploration and faster recoveries. In another example, a mechanic using a tomographic scan of a turbine blade or welded joint in a jet engine can cause voxel data values representing solid metal to appear to be transparent while causing those representing air to be opaque. This allows the viewing of internal flaws in the metal that would otherwise be hidden from the human eye.

Real-time volume rendering is the projection and display of volume data as a series of images in rapid succession, typically at 30 frames per second or faster. This makes it possible to create the appearance of moving pictures of the object, phenomenon, or system of interest. It also enables a human operator to interactively control the parameters of the projection and to manipulate the image, while providing to the user immediate visual feedback. It will be appreciated that projecting tens of millions or hundreds of millions of voxel values to an image requires enormous amounts of computing power. Doing so in real time requires substantially more computational power.

Further background on volume rendering is included in a Doctoral Dissertation entitled "Architectures for Real-Time Volume Rendering" submitted by Hanspeter Pfister to the Department of Computer Science at the State University of New York at Stony Brook in December 1996, and in U.S. Patent #5,594,842, "Apparatus and Method for Real-time Volume Visualization." Additional background on volume rendering is presented in a book entitled "Introduction to Volume Rendering" by Barthold Lichtenbelt, Randy Crane, and Shaz Naqvi, published in 1998 by Prentice Hall PTR of Upper Saddle River, New Jersey.

In many applications of volume rendering, it is desirable to crop away representative portions of the volume data to provide a cutaway view that reveals both interior and exterior portions of the object of interest. Well known examples of such cutaway views in the medical field include the "chair cut" of the human head and the "fence display" of the human body, examples of which are illustrated below. Techniques for cropping three-dimensional volume data are known in the volume rendering art. However, the calculations that are associated with cropping of volume data constitute an additional burden on a process that is already computationally demanding. Consequently, real-time implementation of a complex set of cropping functions is difficult to achieve without reducing the frame rate of the volume rendering system.

### BRIEF SUMMARY OF THE INVENTION

In accordance with the present invention, volume data is processed and projected in real-time by a pipeline that includes cropping stages. In particular, the data is clocked through the cropping stages at a predetermined rate to facilitate real-time volume rendering at a rate of at least 30 frames per second. Hence, the user can interactively update cropping boundaries while viewing the results of the update in real-time.

Multiple cropping regions can be combined in the cropping stages of the pipeline via intersections, unions and inverses to provide a desired view of the volume data. In one embodiment up to three orthogonal cropping regions of the volume data are defined. The regions are combined via control logic that implements combinations of intersection (AND), union (OR) and inversion (!) operations. The combined cropping regions are employed to define sections of the volume data that are to be cropped. In particular, the position of each sample of volume data is compared with the defined ranges to determine whether the sample is within a corresponding cropping region. The sample is either included in or excluded from the displayed volume data in accordance with the result of the comparison and the states of control signals that further define the constitution of each cropping region. Because the comparison and cropping are performed as further steps in the processing pipeline, throughput is not affected; latency is incrementally increased by the introduction of the cropping stages.

### BRIEF DESCRIPTION OF THE SEVERAL VIEWS OF THE DRAWING

The foregoing features of this invention, as well as the invention itself, may be more fully understood from the following Detailed Description of the Invention, and Drawing, of which:
Figure 1 is a diagrammatic illustration of a volume data set;
Figure 2 is a diagrammatic illustration of a view of a volume data set being projected onto an image plane by means of ray-casting;
Figure 3 is a cross-sectional view of the volume data set of Figure 2;
Figure 4 is a diagrammatic illustration of the processing of an individual ray by ray-casting;
Figure 5 is a block diagram of a pipelined processing element for real-time volume rendering -in accordance with the present invention;
Figure 6 is a diagrammatic illustration of an orthogonal volumetric region defined in the volume data set of Figure 1;
Figure 7 is a diagrammatic illustration of multiple orthogonal volume regions defined in the volume data set of Figure 1;
Figure 8 is a schematic diagram of the logic of the cropping stage of a pipelined processing element of Figure 5; and
Figures 9-14 are block diagrams of volume data sets cropped by the pipelined volume rendering processor of Figure 5 including the cropping stage of Figure 8.

### DETAILED DESCRIPTION OF THE INVENTION

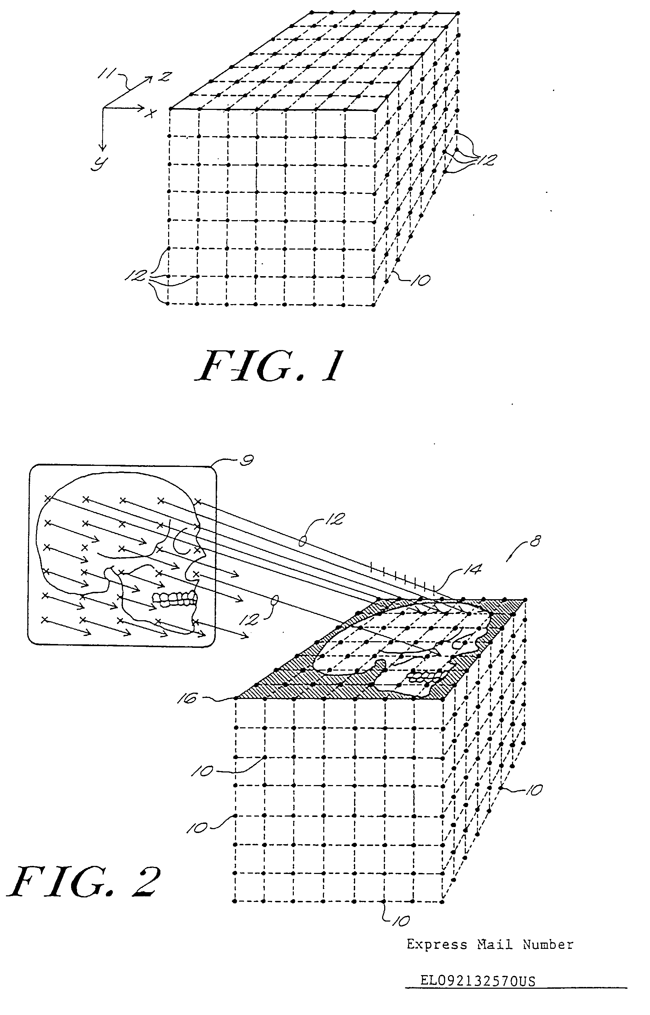

Referring now to Figure 1 and by way of further background, a view of a three-dimensional volume data set 10 is shown. Figure 1 depicts an array of voxel positions 12 arranged in the form of a rectangular solid. More particularly, the voxel positions fill the solid in three dimensions and are uniformly spaced. The position of each voxel can be represented in a coordinate system defined by the three axes 11 labeled X, Y, and Z. Associated with each voxel position is one or more data values representing some characteristics of the object, system, or phenomenon under study, for example density, type of material, temperature, velocity, opacity or other properties at discrete points in space throughout the interior and in the vicinity of that object or system. It is convenient to represent a volume data set in a computer as a three-dimensional array of values, with the value at array index position (X, Y, Z) corresponding to the volume data values at coordinates (X, Y, Z) in three-dimensional space.

Figure 2 illustrates an example of a volume data set 10 comprising an array of slices from, a tomographic scan of the human head. A two-dimensional image plane 16 represents the surface on which a volume rendered projection of the human head is to be displayed. In a technique known as ray-casting, rays 18 are cast from pixel positions 22 on the image plane 16 through the volume data set 10, with each ray accumulating color and opacity from the data at voxel positions as it passes through the volume. In this manner the color, transparency, and intensity as well as other parameters of a pixel are extracted from the volume data set as the accumulation of data at sample points 20 along the ray. In this example, voxel values associated with bony tissue are assigned an opaque color, and voxel values associated with all other tissue in the head are assigned a transparent color. Therefore, the result of accumulation of data along a ray and the attribution of this data to the corresponding pixel result in an image 19 in viewing plane 16 that appears to an observer to be an image of a three-dimensional skull, even though the actual skull is hidden from view by the skin and other tissue of the head.

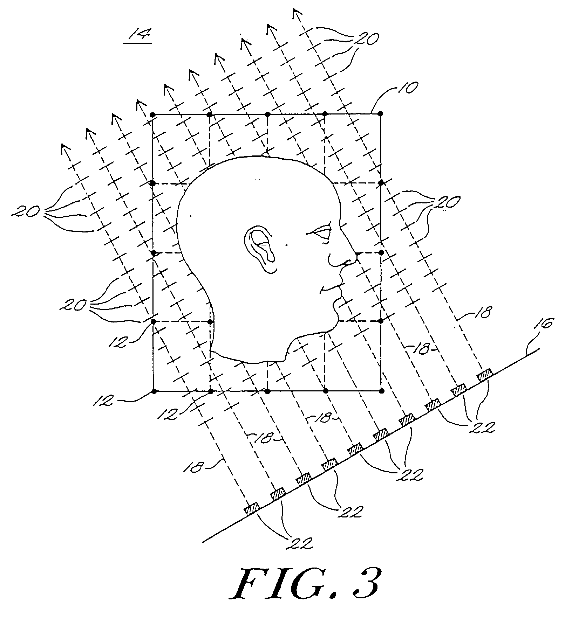

In order to appreciate more fully the method of ray-casting, Figure 3 depicts a two-dimensional cross-section of a three-dimensional volume data set 10 of Figure 2. The first and second dimensions correspond to the dimensions illustrated on the plane of the page. The third dimension of volume data set 10 is perpendicular to the printed page so that only a cross section of the data set can be seen in the figure. Voxel positions are illustrated by dots 12 in the figure. The voxels associated with each position are data values that represent some characteristic or characteristics of a three-dimensional object 14 at fixed points of a rectangular grid in three-dimensional space. Also illustrated in Figure 3 is a one-dimensional view of a two-dimensional image plane 16 onto which an image of object 14 is to be projected in terms of providing pixels 22 with the appropriate characteristics. In this illustration, the second dimension of image plane 16 is also perpendicular to the printed page.

In the technique of ray-casting, rays 18 are extended from pixels 22 of the image plane 16 through the volume data set 10. Each ray accumulates color, brightness, and transparency or opacity at sample points 20 along that ray. This accumulation of light determines the brightness and color of the corresponding pixels 22. Thus while the ray is depicted going outwardly from a pixel through the volume, the accumulated data can be thought of as being transmitted back down the ray where it is provided to the corresponding pixel to give the pixel color, intensity and opacity or transparency, amongst other parameters.

It will be appreciated that although Figure 3 suggests that the third dimension of volume data set 10 and the second dimension of image plane 16 are both perpendicular to the printed page and therefore parallel to each other, in general this is not the case. The image plane may have any orientation with respect to the volume data set, so that rays 18 may pass through the volume data set 10 at any angle in all three dimensions.

It will also be appreciated that sample points 20 do not necessarily intersect the voxel 12 coordinates exactly. Therefore, the value of each sample point must be synthesized from the values of voxels nearby. That is, the intensity of light, color, and transparency or opacity at each sample point 20 must be calculated or interpolated as a mathematical function of the values of nearby voxels 12. The re-sampling of voxel data values to values at sample points is an application of the branch of mathematics known as sampling theory. The sample points 20 of each ray 18 are then accumulated by another mathematical function to produce the brightness and color of the pixel 22 corresponding to that ray. The resulting set of pixels 22 forms a visual image of the object 14 in the image plane 16.

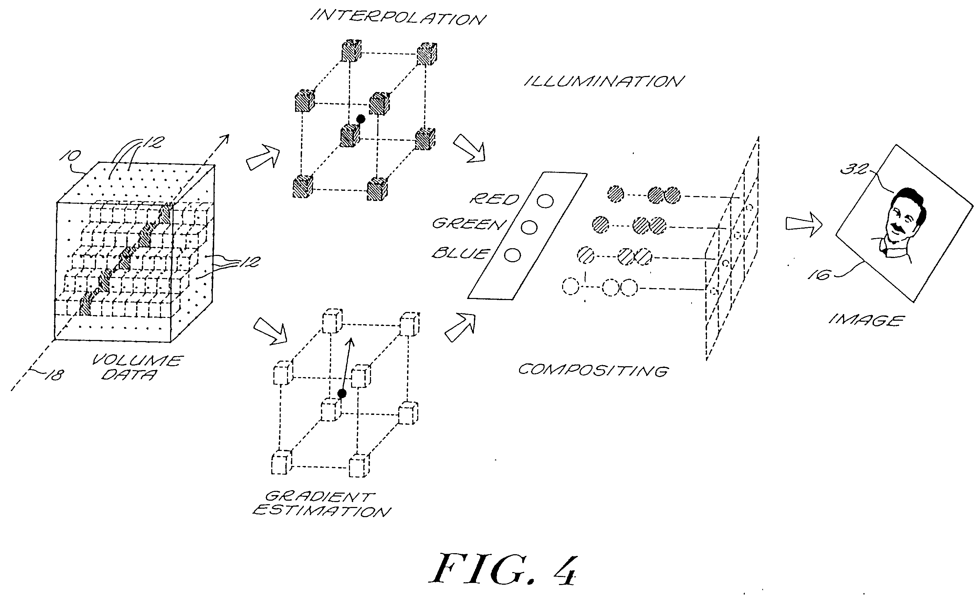

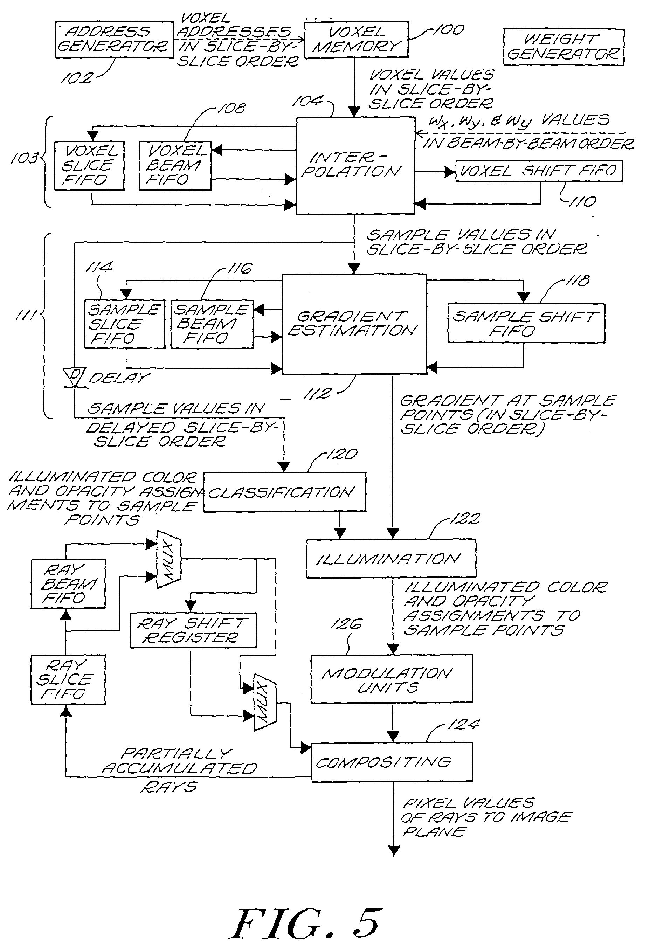

Figure 4 illustrates the processing of an individual ray. Ray 18 passes through the three-dimensional volume data set 10 at some angle, passing near or possibly through voxel positions 12, and accumulates data at sample points 20 along each ray. The value at each sample point is synthesized as illustrated at 21 by an interpolation unit 103 (see Figure 5), and its gradient is calculated as illustrated at 23 by a gradient estimation unit 111 (see Figure 5). The sample point values from sample point 20 and the gradient 25 for each sample point are then processed in the pipeline to assign color, brightness or intensity, and transparency or opacity to each sample. As illustrated at 27, this is done via pipeline processing in which red, green and blue hues as well as intensity and opacity or transparency are calculated. Finally, the colors, levels of brightness, and transparencies assigned to all of the samples along all of the rays are applied as illustrated at 29 to a compositing unit 124 that mathematically combines the sample values into pixels depicting the resulting image 32 for display on image plane 16.

The calculation of the color, brightness or intensity, and transparency of sample points 20 is done in two parts. In one part, a mathematical function such as trilinear interpolation is utilized to take the weighted average of the values of the eight voxels in a cubic arrangement immediately surrounding the sample point 20. The resulting average is then used to assign a color and opacity or transparency to the sample point by some transfer function. In the other part, the mathematical gradient of the sample values at each sample point 20 is estimated by a method such as taking the differences between nearby sample points. It will be appreciated that these two calculations can be implemented in either order or in parallel with each other to produce mathematically equivalent results. The gradient is then used in a lighting calculation to determine the brightness of the sample point. Lighting calculations are well-known in the computer graphics art and are described, for example, in the textbook "Computer Graphics: Principles and Practice," 2nd edition, by J. Foley, A. vanDam, S. Feiner, and J. Hughes, published by Addison-Wesley of Reading, Massachusetts, in 1990.

Figure 5 depicts a block diagram of a pipelined processor appropriate for performing the calculations illustrated in Figure 4. The pipelined processor comprises a plurality of pipeline stages, each stage of which holds one data element, so that a plurality of data elements are being processed at one time. Each data element is at a different degree of progress in its processing, and all data elements move from stage to stage of the pipeline in lock step. At the first stage of the pipeline, a series of voxel data values flow into the pipeline at a rate of one voxel per cycle from the voxel memory 100, which operates under the control of an address generator 102. The interpolation unit 104 receives voxel values located at coordinates X, Y and Z in three-dimensional space, where X, Y and Z are each integers. The interpolation unit 104 is a set of pipelined stages that synthesize data values at sample points between voxels corresponding to positions along rays that are cast through the volume. During each cycle, one voxel enters the interpolation unit and one interpolated sample value emerges. The latency between the time a voxel value enters the pipeline and the time that an interpolated sample value emerges depends upon the number of pipeline stages and the internal delay in each stage.

The interpolation stages of the pipeline comprise a set of interpolator stages 104 and three FIFO elements 106, 108, 110 for recirculating data through the stages. In the current embodiment, these are all linear interpolations, but other interpolation functions such as cubic and LaGrangian may also be employed. In the illustrated embodiment, interpolation is performed in each dimension as a separate stage, and the respective FIFO elements are included to recirculate data for purposes of interpolating between voxels that are adjacent in space but widely separated in the time of entry to the pipeline. The delay of each FIFO is selected to be exactly the amount of time elapsed between the reading of one voxel and the reading of an adjacent voxel in that particular dimension so that the two can be combined in an interpolation function. It will be appreciated that voxels can be streamed through the interpolation stage at a rate of one voxel per cycle with each voxel being combined with the nearest neighbor that had been previously recirculated through the FIFO associated with that dimension.

Three successive interpolation stages, one for each dimension, are concatenated and voxels can pass through the three stages at a rate of one voxel per cycle at both input and output. The throughput of the interpolation stages is one voxel per cycle independent of the number of stages within the interpolation unit and independent of the latency of the data within the interpolation unit and the latency of the recirculation stages within that unit. Thus, the interpolation unit converts voxel values located at integer positions in XYZ space into sample values located at non-integer positions at the rate of one voxel per cycle. In particular, the interpolation unit converts values at voxel positions to values at sample positions disposed along the rays.

Following the interpolation unit 104 is a gradient estimation unit 112, which also comprises a plurality of pipelined stages and recirculation FIFOs. The function of the gradient unit 112 is to derive the rate of change of the sample values in each of the three dimensions. The gradient estimation unit operates in a similar manner to the interpolation unit 104 and computes the rate of change of the sample values in each of the three dimensions. Note, the gradient is used to determine a normal vector for illumination, and its magnitude may be used as a measure of the existence of a surface when the gradient magnitude is high. In the present embodiment the calculation is obtained by taking central differences, but other functions known in the art may be employed. Because the gradient estimation unit is pipelined, it receives one interpolated sample per cycle, and it outputs one gradient per cycle. As with the interpolation unit, each gradient is delayed from its corresponding sample by a number of cycles which is equal to the amount of latency in the gradient estimation unit 112 including respective recirculation FIFOs 114, 116, 118. The delay for each of the recirculation FIFOs is determined by the length of time needed between the reading of one interpolated sample and nearby interpolated samples necessary for deriving the gradient in that dimension.

The interpolated sample and its corresponding gradient are concurrently applied to the classification and illumination units 120 and 122 respectively at a rate of one interpolated sample and one gradient per cycle. Classification unit 120 serves to convert interpolated sample values into colors in the graphics system; i.e., red, green, blue and alpha values, also known as RGBA values. The red, green, and blue values are typically fractions between zero and one inclusive and represent the intensity of the color component assigned to the respective interpolated sample value. The alpha value is also typically a fraction between zero and one inclusive and represents the opacity assigned to the respective interpolated sample value.

The gradient is applied to the illumination unit 122 to modulate the newly assigned RGBA values by adding highlights and shadows to provide a more realistic image. Methods and functions for performing illumination are well known in the art. The illumination and classification units accept one interpolated sample value and one gradient per cycle and output one illuminated color and opacity value per cycle.

Although in the current embodiment, the interpolation unit 104 precedes the gradient estimation unit 112, which in turn precedes the classification unit 120, it will be appreciated that in other embodiments these three units may be arranged in a different order. In particular, for some applications of volume rendering it is preferable that the classification unit precede the interpolation unit. In this case, data values at voxel positions are converted to RGBA values at the same positions, then these RGBA values are interpolated to obtain RGBA values at sample points along rays.

The compositing unit 124 combines the illuminated color and opacity values of all sample points along a ray to form a final pixel value corresponding to that ray for display on the computer terminal or two-dimensional image surface. RGBA values enter the compositing unit 124 at a rate of one RGBA value per cycle and are accumulated with the RGBA values at previous sample points along the same ray. When the accumulation is complete, the final accumulated value is output as a pixel to the display or stored as image data. The compositing unit 124 receives one RGBA sample per cycle and accumulates these ray by ray according to a compositing function until the ends of rays are reached, at which point the one pixel per ray is output to form the final image. A number of different functions well known in the art can be employed in the compositing unit, depending upon the application.

Between the illumination unit 122 and the compositing unit 124, various modulation units 126 may be provided to permit modification of the illuminated RGBA values, thereby modifying the image that is ultimately viewed. One such modulation unit is used for cropping the sample values to permit viewing of a restricted subset of the data. Another modulation unit provides a function to show a slice of the volume data at an arbitrary angle and thickness. A third modulation unit provides a three-dimensional cursor to allow the user or operator to identify positions in XYZ space within the data. Each of the above identified functions is implemented as a plurality of pipelined stages accepting one RGBA value as input per cycle and emitting as an output one modulated RGBA value per cycle. Other modulation functions may also be provided which may likewise be implemented within the pipelined architecture herein described. The addition of the pipelined modulation functions does not diminish the throughput (rate) of the processing pipeline in any way but rather affects the latency of the data as it passes through the pipeline.

In order to achieve a real-time volume rendering rate of, for example, 30 frames per second for a volume data set with 256 x 256 x 256 voxels, voxel data must enter the pipelines at 256³ x 30 frames per second or approximately 500 million voxels per second. It will be appreciated that although the calculations associated with any particular voxel involve many stages and therefore have a specified latency, calculations associated with a plurality of different voxels can be in progress at once, each one being at a different degree of progression and occupying a different stage of the pipeline. This makes it possible to sustain a high processing rate despite the complexity of the calculations.

It will be further appreciated that the above described pipelined processor can be replicated as a plurality of parallel pipelines to achieve higher throughput rates by processing adjacent voxels in parallel. The cycle time of each pipeline is determined by the number of voxels in a typical volume data set, multiplied by the desired frame rate, and divided by the number of pipelines. In a preferred embodiment, the cycle time is 7.5 nanoseconds and four pipelines are employed in parallel.

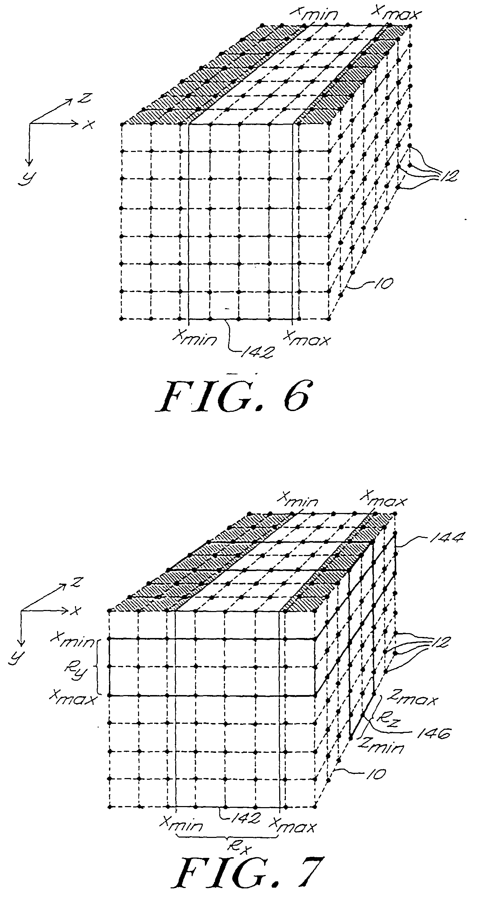

Referring now to Figure 6, an orthogonal three-dimensional region 142 is employed to crop the volume data set 10. In one method of cropping, the sample points that are outside of the region 142 are cropped from the displayed view. In an alternate method of cropping, the sample points that are inside of the region 142 are cropped from the displayed view. The region is "orthogonal" because each side of the region 142 is parallel to one side of the volume data set. In Figure 6, the region 142 extends along the entire Y and Z axes of the volume data set and is bounded by range Rₓ, which extends from Xₘᵢₙ to Xₘₐₓ in the X axis.

Whether individual sample points should be cropped or not is determined by comparing the coordinates of each sample with the defined ranges. In the illustrated embodiment, the X axis value of the position of a sample point (Xₛₐₘₚₗₑ) is compared with Xₘᵢₙ and Xₘₐₓ. Comparisons with the Y axis and Z axis values of the position of the sample are unnecessary because the region 142 extends along the entire length of the Y and Z axes. Thus in Figure 6 the sample point is disposed within the orthogonal volume region 142 if Xₘᵢₙ≤Xₛₐₘₚₗₑ≤Xₘₐₓ. Hence, only two compare operations are required to calculate whether a sample point is cropped from the volume data set.

Referring to Figure 7, a plurality of orthogonal volume regions 142, 144, 146 can be defined within the volume data set. In the illustrated example, the three regions 142, 144, 146 are defined by ranges Rₓ, R_{y} and R_{z}. Region 142 extends along the entire length of the Y and Z axes of the volume data set and is bounded in the X axis by range Rₓ. Range Rₓ extends from Xₘᵢₙ to Xₘₐₓ in the X axis. Region 144 extends along the entire length of the X and Z axes and is bounded in the Y axis by range R_{y}. Range R_{y} extends from Yₘᵢₙ to Yₘₐₓ in the Y axis. Region 146 extends along the entire length of the Y and Z axes and is bounded in the Z axis by range R₂. Range R₂ extends from Zₘᵢₙ to Zₘₐₓ in the Z axis.

The positions of individual sample points relative to each orthogonal region 142, 144, 146 are determined by comparing the position coordinate of the sample point with the min and max values associated with the defined ranges. In particular, the sample point is disposed within region 142 if Xₘᵢₙ≤Xₛₐₘₚₗₑ≤Xₘₐₓ, the sample point is disposed within region 144 if Yₘᵢₙ≤Yₛₐₘₚₗₑ≤Yₘₐₓ, and the sample point is disposed within region 146 if Zₘᵢₙ≤Zₛₐₘₚₗₑ≤Zₘₐₓ. Hence, only four compare operations are required to calculate whether a sample point is cropped from the volume data set when two ranges are employed, and only six compare operations are required when three ranges are employed.

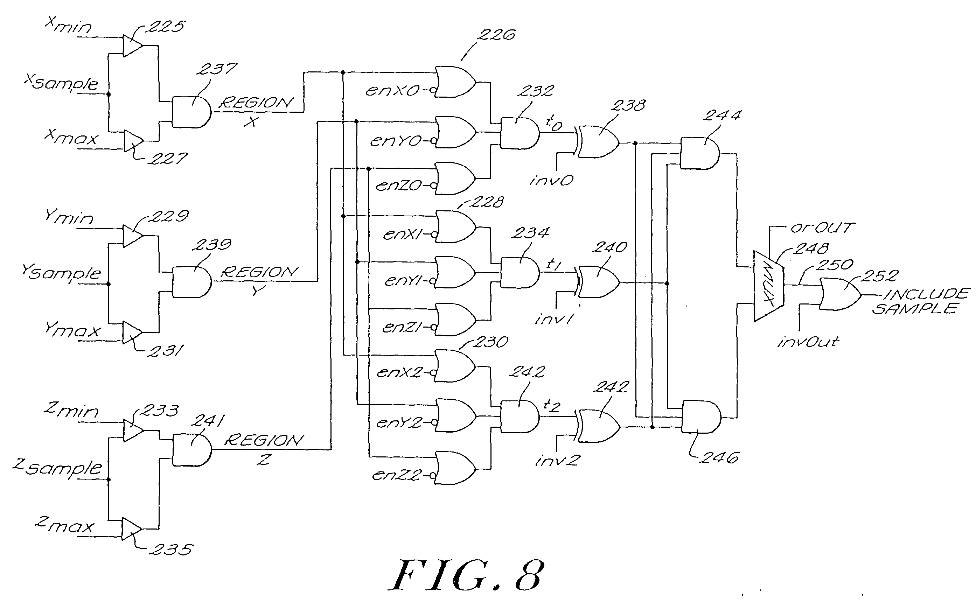

Referring to both Figure 7 and Figure 8, cropping functions are implemented via pipelined cropping control logic 224. Each gate in the control logic represents a cropping stage. Data is clocked through the cropping stages at a predetermined rate to facilitate rendering at a rate of at least 30 frames per second, regardless of the cropping settings. Hence, the user can interactively update cropping boundaries while viewing the results of the update in real-time.

Multiple ranges can be employed to define an orthogonal region, and multiple orthogonal regions can be combined via intersections (AND), unions (OR) and inverses (!) to crop the volume data set in real-time. Each sample point in the volume data set is analyzed individually in the pipeline. Six comparators are employed to compare the position of the sample point with the defined ranges. The output of comparator 225 is logic 1 if Xₘᵢₙ≤Xₛₐₘₚₗₑ. The output of comparator 227 is logic 1 if Xₛₐₘₚₗₑ≤Xₘₐₓ. The outputs of comparator 225 and comparator 227 are logically ANDed in gate 237. Consequently, the value regionx is set to logic 1 for the sample if Xₘᵢₙ≤Xₛₐₘₚₗₑ≤Xₘₐₓ. The output of comparator 229 is logic 1 if Yₘᵢₙ≤Yₛₐₘₚₗₑ. The output of comparator 231 is logic 1 if Yₛₐₘₚₗₑ≤Yₘₐₓ. The outputs of comparator 229 and comparator 231 are logically ANDed in gate 239. Consequently, the value regionY is set to logic 1 for the sample if Yₘᵢₙ≤Yₛₐₘₚₗₑ≤Yₘₐₓ. The output of comparator 233 is logic 1 if Zₘᵢₙ≤Zₛₐₘₚₗₑ. The output of comparator 235 is logic 1 if Zₛₐₘₚₗₑ≤Zₘₐₓ. The outputs of comparator 233 and comparator 235 are logically ANDed in gate 241. Consequently, the value regionZ is set to logic 1 for the sample if Zₘᵢₙ≤Zₛₐₘₚₗₑ≤Zₘₐₓ.

The values regionX, regionY and regionZ are applied to three sets of OR gates 226, 228, 230 having one of three sets of enable lines (enX0, enY0, enZ0), (enX1, enY1, enZ1), and (enX2, enY2, enZ2). In particular, each region is associated with a set of enable lines. The enable line settings within each set indicate the number of ranges that bound the orthogonal region. If the enable associated with an axis is set then the region is bounded in that axis (e.g., if enY1 is set then region 1 is bounded in the Y axis). The outputs of the sets of OR gates 226, 228, 230 respectively are ANDed by gates 232, 234, 236, whose outputs are labelled t0, t1 and t2 respectively. These outputs reflect the following logic functions:
t0=(regionX OR !enX0) AND (regionY OR !enY0) AND (regionZ OR !enZ0)
t1=(regionX OR !enX1) AND (regionY OR !enY1) AND (regionZ OR !enZ1)
t2=(regionX OR !enX2) AND (regionY OR !enY2) AND (regionZ OR !enZ2).

The outputs t0, t1 and t2 can be selectively inverted by XOR gates 238, 240, 242 based upon the states of signals inv0, inv1 and inv2. The outputs of XOR gates 238, 240, 242 are ANDed and ORed by employing AND gate 244 and OR gate 246. A single ANDed or ORed output is selected by employing a multiplexer 248. In particular, the output 250 is designated by the state of multiplexer control orOut: 0 selects AND, 1 selects OR. The output of the multiplexer 248 can be inverted by XOR gate 252 based upon the state of invOut. If orOut=0 then the sample is included in the displayed image (i.e., not cropped) if ((t0 XOR inv0) AND (t1 XOR inv1) AND (t2 XOR inv2)) XOR invOut = 1. If orOut=1 then the sample is included in the image if ((t0 XOR inv0) OR (t1 XOR inv1) OR (t2 XOR inv2)) XOR invOut = 1.

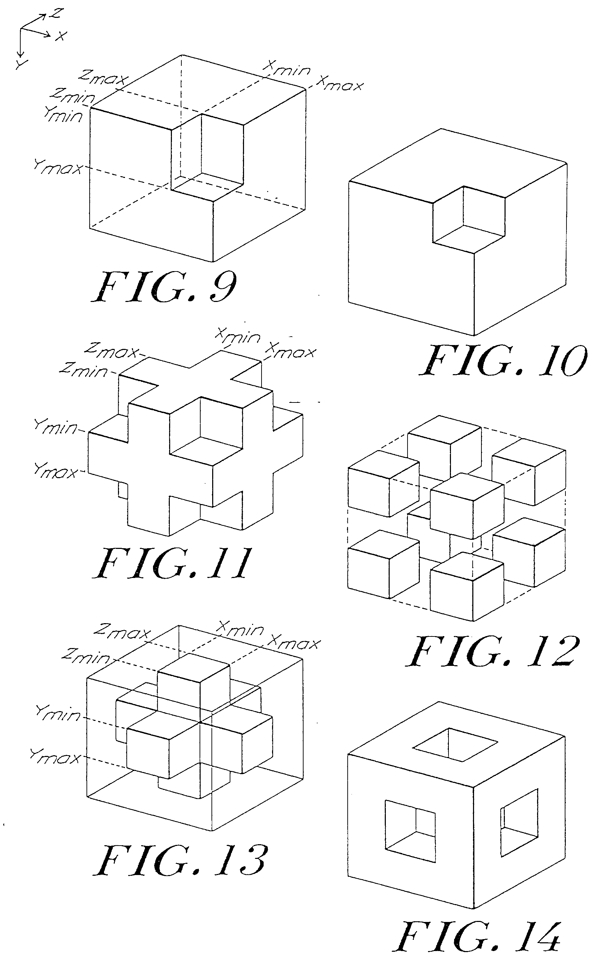

Figures 9-14 illustrate examples of how a volume data set can be cropped with the control logic of Figure 8. To obtain the view of Figure 9 with the illustrated min and max regions, enX0, enY1 and enZ2 of the control logic 24 are set to logic 1 and enY0, enZ0, enX1, enZ1, enX2 and enY2 are set to logic 0. The value t0 represents an orthogonal region between Xₘᵢₙ and Xₘₐₓ that extends the full length of the Y and Z axes. Similarly, the value t1 represents an orthogonal region between Yₘᵢₙ and Yₘₐₓ that extends the full length of the X and Z axes, and the value t2 represents an orthogonal region between Zₘᵢₙ and Zₘₐₓ that extends the full length of the X and Y axes. The inputs inv0, inv1 and inv2 are each set to logic 0. The input orOut is set to logic 0 and the input invOut is set to logic 1. Hence, the regions represented by t0, t1 and t2 are logically ANDed and the result is inverted to crop a single orthogonal volume region from the corner of the volume data set, thereby providing a "chair cut." To obtain the view of Figure 10, which is the inverse of Figure 9, the input invOut is set to logic 0.

To obtain the view of Figure 11 with the illustrated min and max regions, enx0, enY1 and enZ2 of the control logic are set to logic 1 and enY0, enZ0, enX1, enZ1, enX2 and enY2 are set to logic 0. The value t0 represents an orthogonal region between Xₘᵢₙ and Xₘₐₓ that extends the full length of the Y and Z axes. Similarly, the value t1 represents an orthogonal region between Yₘᵢₙ and Yₘₐₓ that extends the full length of the X and Z axes, and the value t2 represents an orthogonal region between Zₘᵢₙ and Zₘₐₓ that extends the full length of the X and Y axes. The inputs inv0, inv1 and inv2 are each set to logic 0. The input orOut is set to logic 1 and the input invOut is set to logic 0. Hence, the regions represented by t0, t1 and t2 are logically ORed to define orthogonal slabs, thereby providing a "fence display." To obtain the view of Figure 12, which is the inverse of Figure 11, the input invOut is set to logic 1.

To obtain the view of Figure 13 with the illustrated min and max regions, enX0, enY0, enX1, enZ1, enY2 and enZ2 are set to logic 1 and enZ0, enY1, and enX2 are set to logic 0. The value t0 represents an orthogonal region bounded by both Xₘᵢₙ, Xₘₐₓ and Yₘᵢₙ, Yₘₐₓ that extends the full length of the Z axis. Similarly, the value t1 represents an orthogonal region bounded by both Xₘᵢₙ, Xₘₐₓ and Zₘᵢₙ, Zₘₐₓ that extends the full length of the Y axis, and the value t2 represents an orthogonal region bounded by both Yₘᵢₙ, Yₘₐₓ and Zₘᵢₙ, Zₘₐₓ that extends the full length of the X axis. The inputs inv0, inv1 and inv2 are each set to logic 0. The input orOut is set to logic 1 and the input invOut is set to logic 0. Hence, the regions represented by t0, t1 and t2 are logically ORed to provide the illustrated view. To obtain the view of Figure 14, which is the inverse of Figure 13, the input invOut is set to logic 1.

Having described the embodiments consistent with the present invention, other embodiments and variations consistent with the present invention will be apparent to those skilled in the art. Therefore, the invention should not be viewed as limited to the disclosed embodiments but rather should be viewed as limited only by the spirit and scope of the appended claims.

## Claims

1. Apparatus for cropping a volume data set in real-time to produce a cropped image, the apparatus comprising a pipelined volume data processor including cropping control logic operative to perform the steps of:
establishing one or more cropping regions of the volume data set, each cropping region being defined by (i) one or more boundary coordinates indicating the boundaries of the cropping region, and (ii) control signals indicating whether the cropping region is to be included in or excluded from the cropped image; and
for each of a sequence of samples of the volume data set, (i) comparing one or more positional coordinates of the sample with corresponding ones of the boundary coordinates, and (ii) indicating whether the sample should be included in the cropped image in accordance with the result of the comparing step and the states of the control signals.

2. Apparatus according to claim 1, wherein the volume data processor comprises one or more processing pipelines each including a plurality of pipelined processing elements, and wherein the cropping control logic is included within a processing element in some or all of the processing pipelines.

3. The apparatus of claim 1 wherein each cropping region is defined by selected ranges in X, Y and Z axes, and wherein the cropping control logic comprises:
a first set of logic gates operative to determine whether a sample is in the range defined in the X axis;
a second set of logic gates operative to determine whether a sample is in the range defined in the Y axis;
a third set of logic gates operative to determine whether a sample is in the range defined in the Z axis;
fourth, fifth and sixth sets of logic gates, each set combining selected outputs of the first, second and third sets of logic gates in a logic AND operation in accordance with corresponding ones of the control signals; and
a seventh set of logic gates selectively combining outputs of the fourth, fifth and sixth sets of logic gates in accordance with corresponding ones of the control signals.

4. The apparatus of claim 3 wherein said seventh set of logic gates implements a logic AND operation on the outputs of the fourth, fifth and sixth sets of logic gates.

5. The apparatus of claim 3 wherein said seventh set of logic gates implements a logic OR operation on the outputs of the fourth, fifth and sixth sets of logic gates.

6. The apparatus of claim 3 wherein said fourth, fifth and sixth sets of logic gates each includes circuitry for selectively inverting their respective outputs in accordance with corresponding ones of the control signals.

7. The apparatus of claim 3 further including inverter circuitry for selectively inverting the output of said seventh set of logic gates in accordance with corresponding ones of the control signals.

8. A method for cropping a volume data set in real time to produce a cropped image, comprising the steps of:
establishing one or more cropping regions of the volume data set, each cropping region being defined by (i) one or more boundary coordinates indicating the boundaries of the cropping region, and (ii) control signals indicating whether the cropping region is to be included in or excluded from the cropped image; and
for each of a sequence of samples of volume data set, (i) comparing one or more positional coordinates of the sample with corresponding ones of the boundary coordinates, and (ii) indicating whether the sample should be included in the cropped image in accordance with the result of the comparing step and the states of the control signals.

9. The method of claim 8 wherein each cropping region is defined by selected ranges in X, Y and Z axes, and further comprising the steps of:
determining, with a first set of logic gates, whether a sample is in the range defined in the X axis;
determining, with a second set of logic gates, whether a sample is in the range defined in the Y axis;
determining, with a third set of logic gates, whether a sample is in the range defined in the Z axis;
combining, with fourth, fifth and sixth sets of logic gates, selected outputs of the first, second and third sets of logic gates in a logic AND operation in accordance with corresponding ones of the control signals; and
selectively combining, with a seventh set of logic gates, outputs of the fourth, fifth and sixth sets of logic gates in accordance with corresponding ones of the control signals.

10. The method of claim 9 further including the step of performing a logic AND operation on the outputs of the fourth, fifth and sixth sets of logic gates with said seventh set of logic gates.

11. The method of claim 9 further including the step of performing a logic OR operation on the outputs of the fourth, fifth and sixth sets of logic gates with said seventh set of logic gates.

12. The method of claim 9 further including the step of selectively inverting outputs of selected ones of said fourth, fifth and sixth sets of logic gates in accordance with corresponding ones of the control signals.

13. The method of claim 9 further including the step of selectively inverting the output of said seventh set of logic gates in accordance with a corresponding one of the control signals.
